# EUROPÄISCHE PATENTSCHRIFT

(11) **EP 2 029 314 B1**
(45) Veröffentlichungstag und Bekanntmachung des Hinweises auf die Patenterteilung: **21.03.2012**
(21) Anmeldenummer: 06753860.3
(22) Anmeldetag: 24.05.2006
(51) Int. Cl.: B23K 37/04, B23K 26/42, B23K 26/08, B23Q 3/02, B23Q 1/03, B23K 26/38

(54) **WERKSTÜCKAUFLAGE ZUR AUFNAHME EINES INSBESONDERE TAFELFÖRMIGEN WERKSTÜCKS IN EINER BEARBEITUNGSANLAGE MIT BEWEGBAREN, TRAGPUNKTSPITZEN AUFWEISENDEN AUFLAGEELEMTEN**
WORKPIECE SUPPORT FOR RECEIVING AN ESPECIALLY TABULAR WORKPIECE IN A MACHINING INSTALLATION COMPRISING MOBILE SUPPORTING ELEMENTS PROVIDED WITH CARRIER TIPS
PORTE-PIÈCE DESTINÉ À RECEVOIR UNE PIÈCE EN PARTICULIER EN FORME DE PLAQUE DANS UNE UNITÉ D'USINAGE COMPRENANT DES ÉLÉMENTS DE SUPPORT MOBILES PRÉSENTANT DES POINTES D'APPUI

(43) Veröffentlichungstag der Anmeldung: 04.03.2009
(73) Patentinhaber: TRUMPF Werkzeugmaschinen GmbH + Co. KG, 71254 Ditzingen (DE)
(72) Erfinder: HÄCKER, Michael, 71299 Wimsheim (DE); BLASER, Martin, 88267 Vogt (DE)
(74) Vertreter: Maser, Jochen
(86) Internationale Anmeldenummer: PCT/EP2006/004986
(87) Internationale Veröffentlichungsnummer: WO 2007/134628

(56) Entgegenhaltungen:
- EP-A2- 1 110 667
- JP-A- 10 263 874
- JP-A- 11 179 584
- JP-A- 11 192 576
- JP-A- 59 127 988
- JP-A- 2001 170 790

## Beschreibung

Die Erfindung betrifft eine Werkstückauflage zur Aufnahme eines insbesondere tafelförmigen Werkstücks in einer Bearbeitungsanlage, insbe-sondere einer Laserbearbeitungsanlage gemäß dem Oberbegriff des Anspruchs 1 (siche, 2.B., JP 10 26 3 874A).

Zur Bearbeitung von insbesondere tafelförmigen Werkstücken in Laserbearbeitungsanlagen ist aus der JP 10 263874 A eine Werkstückauflage bekannt, die einen Rahmen mit mehreren, vorzugsweise parallel zueinander angeordneten Auflageelementen aufweist, auf denen das zu bearbeitende Werkstück aufliegt. Die Auflageelemente weisen in regelmä-βigen Abständen Tragpunktspitzen auf und bilden ein Auflagefeld für das oder die Werkstücke.

Solche Laserbearbeitungsanlagen umfassen einen relativ zur Werkstückauflage bewegbaren Laserschneidkopf, um mit einem Laserstrahl ein ruhendes Werkstück, das auf den Tragpunktspitzen der Auflageelemente aufliegt, zu bearbeiten. Während der Bearbeitung kommt es beim Überfahren der Tragpunktspitzen durch den Laserstrahl zu Problemen, wie beispielsweise Beschädigungen der Tragpunktspitzen durch Aufschwei-βungen, Beschädigung der Tragpunktspitzen durch Wegschmelzen und/oder ein ungleichmäßiger Schnitt zwischen dem Gutteil und Restteil, da die Schneidverhältnisse an den Tragpunktspitzen anders als an den benachbarten Tragpunktspitzen sind.

Um die vorgenannten Probleme bei der Bearbeitung der Werkstücke zu reduzieren, geht aus der DE 38 03 918 A1 eine Werkstückauflage hervor, bei welcher die Auflageelemente in Abhängigkeit der Position des Laserstrahls während der Bearbeitung versenkbar sind. Durch eine mit dem Schneidkopf gekoppelte Mechanik wird jeweils dasjenige Auflageelement versenkt, das bei der Bearbeitung im Auftreffbereich des Laserstrahles liegt.

Eine analoge Ausgestaltung ist ebenfalls durch die JP 59127988 A bekannt. Diese Auflageleisten werden über eine Kurvenführung angesteuert, wobei gleichzeitig eine Absenk- und Verschiebebewegung in Längsrichtung des Auflageelementes vorgesehen ist.

Bei beiden Ausführungsformen wird über die gesamte Länge der Auflageelemente ein Absenken der Tragpunktspitzen bewirkt. Diese Ausführungsformen weisen zwar den Vorteil auf, dass ein Aufschweißen der Tragpunktspitzen beim Überfahren während des Schneidvorganges verringert wird. Jedoch kann es zu ungleichmäßigen Schnitten kommen, insbesondere dann, wenn ein Werkstück fast vollständig aus der Werkstücktafel ausgeschnitten ist und mit einem Ende an den abgesenkten Tragpunktspitzen aufliegt.

Aus der JP 62292293 A2 geht zur Vermeidung von Aufschweißungen eine Anordnung der Auflageelemente hervor, die beim Überfahren durch den Laserschneidkopf aus der Auflageebene um die Längsachse der Auflageelemente herausgeschwenkt werden. Dadurch wird ein Aufschweißen vermieden. Diese Ausführungsform weist den Nachteil auf, dass ein größerer Abstand zu den benachbarten Auflageelementen einzuhalten ist sowie bereits benachbarte und vollständig ausgeschnittene Gutteile zu einem Verklemmen nach der Schwenkbewegung führen können.

Aus der JP 2001 170 790 A ist eine Werkstückauflage zur Aufnahme von beispielsweise tafelförmigen Werkstücken bekannt, bei dem das Auflagefeld durch feststehende Stege und verschiebbare Stege gebildet wird, die jeweils nach oben offene schlitzförmige Aussparungen aufweisen. In diese nach oben offenen schlitzförmigen Aussparungen werden Auflageelemente eingesetzt. In einer Ausgangsposition liegen die Stege rechtwinkelig zu den Auflageelementen. Durch eine Verschiebeeinrichtung werden die verschiebbaren Stege relativ zu den feststehenden Stegen verschoben, wodurch die Auflageelemente eine Biegung erfahren und einen wellenförmigen Verlauf einnehmen. In den Kreuzungspunkten zwischen den Stegen und den Auflageelementen verbleiben die Tragpunktspitzen jedoch ortsfest. Dies weist den Nachteil auf, dass beim Überfahren der Tragpunktspitzen ein Verschweißen der Auflageelemente mit den feststehenden und verschiebbaren Stegen erfolgen kann, wodurch innerhalb kurzer Zeit die Einbringung einer Wellenform verhindert wird.

Aus der JP 9066392 A2 geht eine alternative Anordnung von Auflageelementen hervor, bei der die Auflageelemente zwei Seiten von Tragpunktspitzen aufweisen, die aus der Auflageebene heraus schwenkbar sind. Somit ist eine Reihe von Tragpunktspitzen während dem Schneidprozess zur Aufnahme des Werkstücks vorgesehen, wohingegen zum Be-und Entstücken der Werkstücke beziehungsweise der Gut- und Restteile eine zweite Ausführungsform der Tragpunktspitzen in die Auflageebene geschwenkt wird. Dabei kann analog zur Ausführungsform der JP 62292293 A2 ein Verklemmen der Gut- oder Restteile mit dem schwenkbaren Auflageelement erfolgen.

Aus der JP 62003892 A2 geht des Weiteren eine Anordnung für eine Werkstückauflage hervor, bei der jedes Auflageelement während dem Überfahren des Laserschneidkopfes absenkbar sind, wobei eine Hebelanordnung hierfür vorgesehen ist, die über eine verfahrbare Kulisse angesteuert wird. Diese Ausgestaltung ist mechanisch sehr aufwändig und kostenintensiv.

Die vorgenannten Ausführungsformen sind störanfällig, da durch Schlacke oder dergleichen ein Verschweißen oder Verschmelzen mit weiteren Rahmenteilen erfolgen kann. Des Weiteren sind große Risiken enthalten, da durch das Absenken der Tragpunktspitzen ein Verkippen sowie ein Verklemmen von bereits aus einem Werkstück ausgeschnittenen oder fast vollständig ausgeschnittenen Gutteilen gegeben sein kann.

Der Erfindung liegt deshalb die Aufgabe zugrunde, eine Werkstückauflage für eine Bearbeitungsanlage vorzuschlagen, bei der die Tragpunktspitzen derart zum Werkstück positionierbar sind, dass diese beim Schneiden mit einem Schneidstrahl, insbesondere beim Laserschneiden, nicht oder in einer erheblich verringerten Anzahl überfahren werden, dass die bereits ausgeschnittenen Gutteile sicher unterstützt werden und dass eine sichere Entnahme der Gut- und Restteile ermöglicht ist.

Diese Aufgabe wird erfindungsgemäß durch eine Werkstückauflage gemäß den Merkmalen des Anspruchs 1 gelöst. Weitere vorteilhafte Ausgestaltungen und Weiterbildungen sind in den weiteren Ansprüchen angegeben.

Die Werkstückauflage wird beispielsweise vor dem Beladen mit einem oder mehreren Werkstücken auf die anstehende Bearbeitung eingestellt. Die Schachtelung der Gutteile in einem Werkstück ist vor der Bearbeitung des insbesondere tafelförmigen Werkstückes bekannt, so dass in Abhängigkeit dieser Schachtelung die Auflageelemente relativ zum Rahmen durch eine Verschiebebewegung positioniert werden. Dadurch werden an den Auflageelementen vorgesehene Tragpunktspitzen, die ein Auflagefeld bilden, in eine inaktive Position zum Werkstück positioniert, das heißt, dass ein wesentlicher Anteil der Tragpunktspitzen oder alle Tragpunktspitzen außerhalb des Wirkbereiches eines Laserstrahles liegen, der beim Schneiden des Werkstückes überfahren wird. Dadurch werden die Tragpunktspitzen nicht überfahren, so dass ein Aufschweißen oder Verschmelzen mit dem Gut- oder Restteil nicht gegeben ist. Durch die Einstellung und Positionierung der Auflageelemente vor dem Beladen ist eine exakte Einstellung der Auflageelemente ermöglicht. Darüber hin-aus kann in einfacher Weise durch Anlegen des oder der Werkstücke an einer Referenzanlage oder Nullpunktanlage eine exakte Ausrichtung des oder der Werkstücke zum Rahmen der Werkstückauflage und somit zu den Auflageelementen gegeben sein. Darüber hinaus weist diese Ausgestaltung den Vorteil auf, dass während der gesamten Bearbeitung des Werkstückes die Auflageelemente in ihrer einmal eingestellten Position verbleiben, so dass gleichbleibende Bedingungen während der gesamten Bearbeitung herrschen und eine störungsfreie Entsorgung der Gut- und Resttelle ermöglicht ist.

Nach einer vorteilhaften Ausgestaltung der Erfindung ist vorgesehen, dass die Auflageelemente im Rahmen der Werkstückauflage einen Verschiebeweg von wenigstens einem halben Abstand von zwei benachbarten Tragpunktspitzen aufweist. Dadurch kann ein hinreichender Verschiebeweg geschaffen werden, um ein Überfahren der Tragpunktspitzen durch den Laserschneidstrahl zu vermeiden. Des Weiteren kann bevorzugt vorgesehen sein, dass bei sehr großen Bauteilen, die aus einem tafelförmigen Werkstück herausgeschnitten werden, Auflageelemente eingesetzt werden, deren Tragpunktspitzen einen größeren Abstand zueinander aufweisen als beim Herstellen von vielen kleinen Bauteilen, für die Auflageelemente vorgesehen sind, bei denen der Abstand der Tragpunktspitzen kleingehalten ist.

Nach einer bevorzugten Ausgestaltung der Erfindung ist vorgesehen, dass die Auflageelemente bei einem Verschiebeweg, der größer als ein halber, insbesondere ein voller Abstand von zwei benachbarten Tragpunktspitzen ist, gegenüber einer durch die benachbarten Tragpunktspitzen gebildeten Auflageebene absenkbar sind. Dadurch können die Tragpunktspitzen gegenüber einer Auflageebene abgesenkt werden, so dass ein Aufschweißen oder Verschmelzen der Tragpunktspitzen nicht gegeben ist. Diese Einstellung erfolgt bevorzugt dann, wenn die Teilung der Tragpunktspitzen bei der vorgesehenen Schachtelung im Werkstück eine zu große Anzahl von Überschneidungen zwischen dem Laserschneidstrahl und den Tragpunktspitzen ergibt. Bei großen Teilen können die Auflageelemente auch zusätzlich abgesenkt werden, um die Auflageelemente zu schonen.

Die Auflageelemente weisen bevorzugt an deren Unterseite eine Kulisse auf, entlang der die Auflageelemente versenkbar vorgesehen sind. Dadurch kann das Maß der Absenkung eingestellt werden.

Die Positionierung der Auflageelemente innerhalb des Rahmens erfolgt nach einer bevorzugten Ausgestaltung der Erfindung durch eine Verschiebeeinrichtung, die eine Zustellvorrichtung und einen Antriebsmotor umfasst, welcher nacheinander an der Zustellvorrichtung eines jeden Auflageelementes angreift und entlang der Stirnseiten der Auflageelemente verfahrbar ist. Dadurch ist eine kostengünstige Anordnung mit nur einem Antriebsmotor ermöglicht, wobei die Einstellung der Auflageelemente nacheinander erfolgt.

Nach einer alternativen Ausgestaltung der Erfindung ist vorgesehen, dass für jedes Auflageelement eine Zustelleinrichtung vorgesehen ist, die mit einem Antriebsmotor betätigt wird. Dadurch kann nach dem Ermitteln der Position für das jeweilige Auflageelement eine gleichzeitige oder quasi gleichzeitige Einstellung aller Auflageelemente erfolgen.

Nach einer vorteilhaften Ausgestaltung der Erfindung ist vorgesehen, dass zur Einstellung der Tragpunktspitzen im Auflagefeld zunächst eine Hubbewegung der Auflageelemente vorgesehen ist und anschließend das jeweilige Auflageelement durch eine Schiebebewegung in die inaktive Position verfahrbar ist. Diese Ausführungsform weist den Vorteil auf, dass durch die Zugbeanspruchung gegebenenfalls fest sitzende Auflageelemente ohne Beschädigungen gelöst werden können, um anschließend durch eine freigängige Schiebebewegung eine exakte Einstellung zu er-möglichen. Bevorzugt wird das Auflageelement in eine Nullstellung oder Endlage übergeführt, so dass aus dieser Position heraus eine exakte Positionierung der Lage der Tragpunktspitzen ermöglicht ist.

Zwischen der Zustellvorrichtung und dem Antriebsmotor der Verschiebeeinrichtung ist bevorzugt eine Kupplung vorgesehen. Die erste Ausführungsform, bei der die Verschiebeeinrichtung nacheinander die einzelnen Auflageelemente ansteuert, weist bevorzugt eine kraft- und/oder formschlüssige Kupplung auf. Die alternative Ausführungsform, bei der mehrere Zustellvorrichtungen gleichzeitig betätigt werden oder jede Zustellvorrichtung einem Antriebsmotor zugeordnet ist, kann als eine starre und dauerhafte Kupplung vorgesehen sein.

Die Zustelleinheit kann beispielsweise als ein Spindelantrieb oder ein Gewindeantrieb vorgesehen sein. Dadurch kann eine exakte Einstellung der Auflageelemente ermöglicht werden. Gleichzeitig kann zunächst eine Zugbeanspruchung auf die Auflageelemente ausgeübt werden, um die Auflageelemente in Nullstellung überzuführen und anschließend durch eine Verschiebebewegung einzustellen.

Alternativ kann vorgesehen sein, dass die Zustellvorrichtung ein exzentrisch gelagertes Stellelement umfasst, welches mit einem Lagerzapfen an einem Langloch des Auflageelementes angreift. Dadurch kann eine einfache mechanische Ansteuerung gegeben sein, die hinreichend exakt ist.

Das Stellelement kann gemäß einer bevorzugten Ausführungsform als Zahnleiste ausgebildet sein, welches über ein Zahnrad schwenkbar angetrieben wird, um die Hubbewegung auf das Auflageelement zu übertragen. Alternativ kann vorgesehen sein, dass das Stellelement anstelle einer Verzahnung Kurvenabschnitte aufweist, an der ein Reibrad angreift.

Eine weitere alternative Ausgestaltung der Zustelleinrichtung sieht vor, dass eine Schubstange sich entlang von wenigstens zwei Auflageelementen erstreckt und durch einen Antriebsmotor hin und her bewegbar ist. Jedes Auflageelement ist über einen Hebel mit der Schubstange gekoppelt, wobei der Hebel über einen ansteuerbaren Freilauf in der Schubstange geführt ist. Dadurch kann mit einer Schubstange eine Ansteuerung von mehreren Auflageelementen erfolgen, wobei jedes Auflageelement spezifisch zur Einstellung der inaktiven Position ansteuerbar bleibt. Durch den ansteuerbaren Freilauf kann jedes Auflageelement bevorzugt nach dem Durchlaufen einer vorbestimmten Verschiebebewegung freigegeben werden, wodurch eine in einer Langlochöffnung der Schubstange geführte Schwenkachse des Hebels freilaufend geführt ist, ohne das Auflageelement bei einer weiteren Verschiebebewegung der Schubstange zu betätigen.

Der Verriegelungsantrieb an der Schubstange zur Positionierung der Schwenkachse des Hebels in einer Endstellung des Langlochs umfasst einen Aktuator. Dieser kann magnetisch, hydraulisch, pneumatisch oder dergleichen angetrieben sein.

Nach einer weiteren bevorzugten Ausgestaltung der Erfindung ist vorgesehen, dass die Auflageelemente durch Trägerelemente im Rahmen aufgenommen sind, die zusammen eine gitterförmige Struktur bilden. Die Trägerelemente weisen bevorzugt schlitzförmige Ausnehmungen auf, in denen die Auflageelemente geführt sind. Dadurch können große oder stabile Auflagefelder für schwere Werkstücke erzielt werden.

Bevorzugt ist vorgesehen, dass diese schlitzförmigen Ausnehmungen der Trägerelemente wenigstens die doppelte Breite der Auflageelemente umfassen und die Auflageelemente insbesondere quer zu deren Längserstreckung verschiebbar von den Verschiebeeinrichtungen aufgenommen sind. Dadurch wird die Einstellung des Auflageelemente um einen zusätzlichen Freiheitsgrad in der Auflageebene rechtwinklig zur Verschieberichtung in Längsrichtung der Auflageelemente ermöglicht.

Die Auflageelemente werden bevorzugt nach deren Positionierung und Ausrichtung zum Rahmen durch die Trägerelemente fixiert, wobei durch eine Verschiebbewegung der Trägerelemente eine Klemmung zu den Auflageelementen erfolgt. Dadurch kann die voreingestellte Position der Tragpunktspitzen sicher aufrechterhalten bleiben.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht von oben auf eine erfindungsgemäße Werkstückauflage,
- Figur 2: eine perspektivische Detailansicht einer ersten Ausführungsform einer Verschiebeeinrichtung,
- Figur 3: eine perspektivische Detailansicht einer Zustelleinrichtung der Verschiebeeinrichtung gemäß Figur 2,
- Fig. 4a bis c: schematische Seitenansichten von einem in der Höhe einstellbaren Auflageelement,
- Figur 5: eine schematische Ansicht von oben auf eine alternative Ausführungsform einer Verschiebeeinrichtung,
- Fig. 6a und b: schematische Ansichten einer weiteren alternativen Ausführungsform einer Verschiebeeinrichtung,
- Figur 7: eine alternative Ausgestaltung der Verschiebeeinrichtung zu den Figuren 6a und b,
- Fig. 8a und b: schematische Darstellungen von Auflageelementen und Trägerelementen in einer losen und geklemmten Position,
- Figur 9: eine perspektivische Darstellung einer Verstelleinrichtung zur Erzeugung der Klemmung der Auflageelemente zu den Trägerelementen.

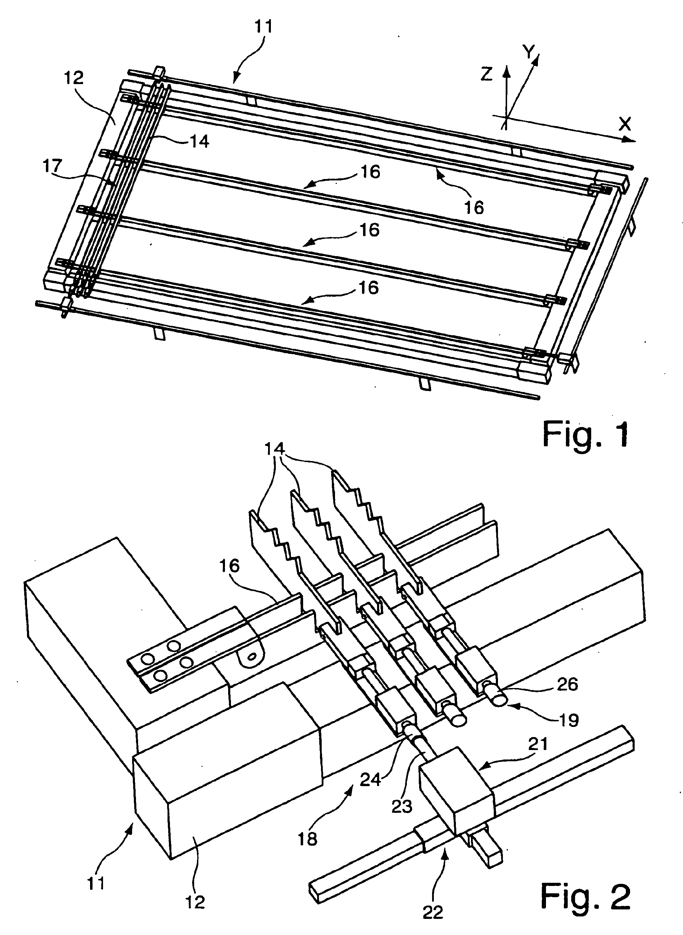

In Figur 1 ist eine perspektivische Ansicht von oben auf eine erfindungsgemäße Werkstückauflage 11 dargestellt. Diese Werkstückauflage 11 umfasst einen Rahmen 12, der zur Aufnahme von in Y-Richtung weisenden Auflageelementen 14 vorgesehen ist. Diese Auflageelemente 14 werden zumindest von zwei Trägerelementen 16, insbesondere im mittleren Bereich, getragen, welche sich in X-Richtung erstrecken. Die Auflageelemente 14 bilden ein Auflagefeld 17 für ein nicht näher dargestelltes Werkstück, welches bevorzugt tafelförmig ausgebildet ist und auf den Auflageelementen 14 aufliegt. Diese Werkstückauflage 11 ist als separate oder verfahrbare Palette vorgesehen, die in Laserbearbeitungsanlagen eingesetzt wird. Solche Paletten können außerhalb der Laserbearbeitungsanlage be- und entladen werden und werden zur Bearbeitung des oder der Werkstücke in die Laserbearbeitungsmaschine eingefahren. Alternativ kann auch diese Werkstückauflage 11 stationär in einer Laserbearbeitungsmaschine vorgesehen sein. Bevorzugt werden tafelförmige Werkstücke, die aus verschiedenen Materialien bestehen können, durch Schneiden mit einem Laserstrahl bearbeitet.

In Figur 2 ist eine perspektivisch vergrößerte Darstellung eines Eckbereiches der Werkstückauflage 11 dargestellt. Die Auflageelemente 14 sind durch eine Verschiebeeinrichtung 18 in Y-Richtung gemäß der Erfindung verfahrbar. Diese Verschiebeeinrichtung 18 umfasst gemäß dem Ausführungsbeispiel in Figur 1 eine Zustelleinrichtung 19 sowie einen Antriebsmotor 21, der auf einem Linearachsensystem 22 in X- und Y-Richtung entlang des Rahmens 12 verfahrbar ist, um nacheinander die Zustelleinrichtungen 19 zu betätigen. Der Antriebsmotor 21 weist eine Ausgangswelle 23 auf, an dessen freien Ende ein Kupplungsteil 24 vorgesehen ist, welches an einem komplementären Kupplungsteil 26 der Zustelleinrichtung 19 angreift. Beispielsweise kann durch einen Formschluss eine Wirkverbindung erzielt werden. Alternativ kann auch eine aktive Kupplung durch ein Greifelement oder dergleichen ausgebildet sein.

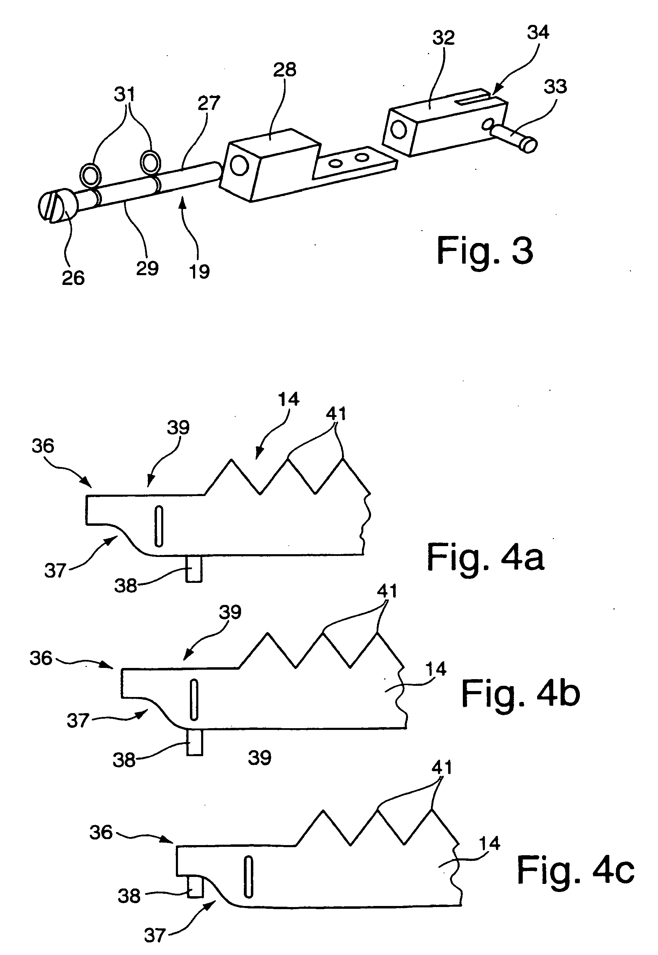

Die Zustelleinrichtung 19, welche beispielsweise in Figur 3 näher dargestellt ist, umfasst zumindest eine Gewindestange 27 oder eine Spindel, durch welche eine exakte Ansteuerung eines Verschiebeweges für das Auflageelement 14 in Y-Richtung ermöglicht ist. Die Gewindestange 27 ist an einem Halteblock 28 aufgenommen, wobei ein Führungsabschnitt 29 der Gewindestange 27 in einer Bohrung des Halteblocks 28 geführt und über Sicherungselemente 31 zum Halteblock 28 fixiert ist. Dadurch wird während einer Drehbewegung der Gewindestange 27, die in eine Gewindebohrung des Anschlussflansches 32 eingreift, eine Hin- und Herbewegung des Auflageelementes 14 erzielt. Das Auflageelement 14 ist durch einen lösbaren Stift oder Bolzen 33 in einen Schlitz 34 des Anschlussflansches 32 gesichert.

Diese Ausführungsform weist den Vorteil auf, dass aufgrund des Drehantriebes das Auflageelement 14 zunächst durch eine Zugbeanspruchung, insbesondere in eine Nullpunktlage, überführbar ist. Dadurch können gegebenenfalls erfolgende Verschweißungen oder Verhakungen des Auflageelementes 14 mit den Trägerelementen 16 gelöst werden. Im Anschluss daran erfolgt durch eine Drehrichtungsumkehr des Antriebsmotors 21 eine Zustellbewegung, wodurch das Auflageelement 14 über eine Verschiebebewegung in eine vorbestimmte, also inaktive Position für die nachfolgende Werkstückbearbeitung übergeführt wird.

Die Verschiebeeinrichtung 18 gemäß Figur 2 kann einen Antriebsmotor 21 umfassen, der nacheinander folgend die einzelnen Auflageelemente 14 ansteuert und betätigt. Alternativ kann vorgesehen sein, dass an jedem Ende des Auflageelementes 14 die Zustelleinrichtung 19 vorgesehen ist, so dass zwei Antriebsmotoren 21, die einander gegenüber liegen, synchron oder aufeinander folgend arbeiten und das Auflageelement 14 in die vorgesehene inaktive Position überführen. Dabei kann vorgesehen sein, dass ein Antriebsmotor 21 für die Zugbewegung des Auflageelementes 14 vorgesehen ist und der gegenüberliegende Antriebsmotor 21 für die Schiebebewegung. Nach einer weiteren alternativen Ausführungsform kann vorgesehen sein, dass anstelle der Anbringung eines Linearachsensystems 22 auf einer oder beiden Längsseiten des Rahmens 12 jedem Auflageelement ein Antriebsmotor 21 zugeordnet ist, um die Auflageelemente 14 anzusteuern.

In den Figuren 4a bis c ist eine Seitenansicht eines Endabschnittes 36 der Auflageelemente 14 dargestellt. Ein solcher Endabschnitt 36 greift in einen Schlitz 34 des Anschlussflansches 32 ein, wobei der Bolzen 33 bevorzugt in einer in Z-Richtung ausgerichteten Langlochbohrung geführt ist. Der Endabschnitt 36 weist auf seiner Unterseite eine Kulisse 37 auf, durch welche das Auflageelement 14 sich an einer Lagerstelle 38 abstützt, die am Rahmen 12 befestigt ist. Der Endabschnitt 36 weist an einer Oberseite einen Abschnitt 39 ohne Tragpunktspitzen 41 auf. Dieser Abschnitt 39 ist in seiner Länge derart ausgebildet, dass die Auflageelemente 14 zunächst in einer nicht abgesenkten Position verschiebbar sind. Erst bei einem Verschiebeweg, der wenigstens einen halben Abstand von zwei Tragpunktspitzen 41 entspricht, kann eine Absenkung des Auflageelementes 14 erfolgen.

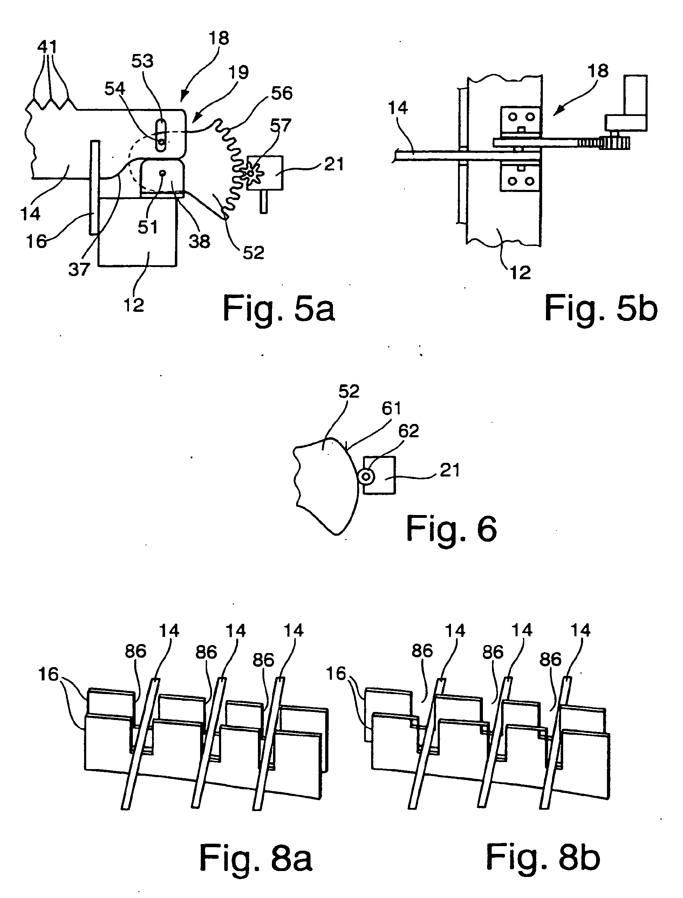

In den Figuren 5a und b ist eine alternative Ausführungsform zu der Verschiebeeinrichtung 18 gemäß den Figuren 2 und 3 dargestellt. Die Zustelleinrichtung 19 der Verschiebeeinrichtung 18 umfasst ein um eine Schwenkachse 51 exzentrisch gelagertes Stellelement 52. In ein in Z-Richtung verlaufendes Langloch 53 des Auflageelementes 14 greift ein Stift 54 des Stellelementes 52 ein, durch welches das Auflageelement 14 in Y-Richtung verschiebbar ist. Das Stellelement 52 umfasst eine Verzahnung 56, an welcher ein Zahnrad 57 angreift, das von dem Antriebsmotor 21 angetrieben wird. In Abhängigkeit der Winkelstellung des Stellelementes 52 erfolgt die Hub- oder Schubbewegung des Auflageelementes 14. Diese Ausführungsform ermöglicht, dass zunächst eine Zugbeanspruchung auf das Auflageelement 14 erfolgt und im Anschluss daran ein Schubbewegung zur Einstellung der Tragpunktspitzen 41 in eine inaktive Position. Diese Ausführungsform umfasst des Weiteren eine zusätzliche Absenkmöglichkeit der Auflageelemente 14 in Z-Richtung aufgrund der Kulisse 37.

In Figur 6 ist eine alternative Ausführungsform zu den Figuren 5a und b dargestellt. Anstelle eines schwenkbaren Antriebes über ein Zahnradgetriebe kann auch ein Antrieb über einen Reibschluss erfolgen, der aufgrund eines Kurvenabschnitts 61 gegeben ist, an dem ein Reibrad 62, insbesondere eine Gummirolle, angreift.

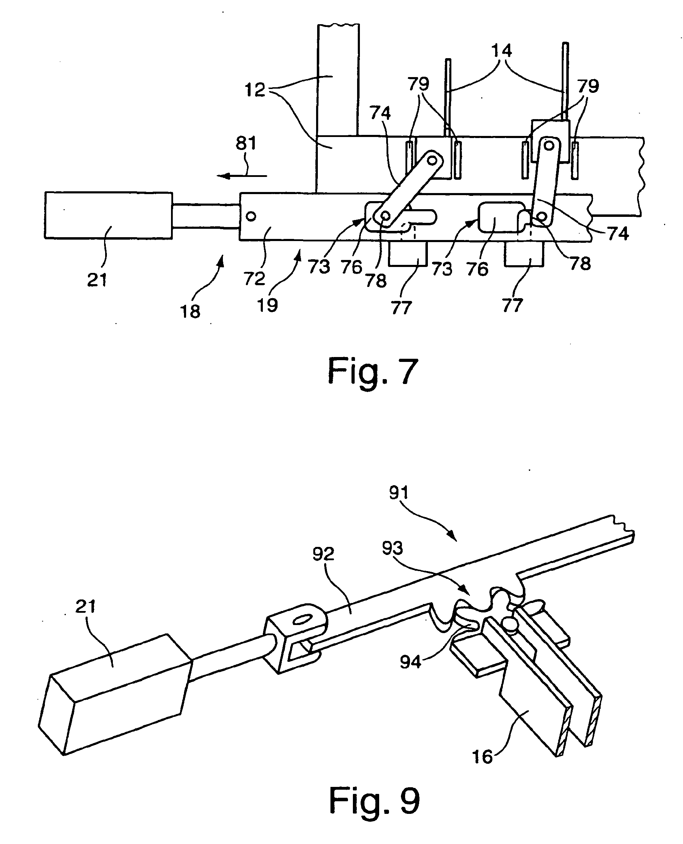

In Figur 7 ist eine weitere alternative Ausführungsform einer Verschiebeeinrichtung 18 dargestellt. Diese Verschiebeeinrichtung 18 weist einen Antriebsmotor 21 auf, welcher über eine Zustelleinrichtung 19 gleichzeitig mehrere Auflageelemente 14 einstellen kann. Die Zustelleinrichtung 19 umfasst eine Schubstange 72, welche sich zumindest entlang von zwei Auflageelementen 14 erstreckt. Die Zugstange 72 ist bevorzugt fest mit dem Antriebsmotor 21 gekoppelt, so dass eine Hubbewegung des Antriebsmotors 21 unmittelbar auf die Schubstange 72 übertragen wird.

In der Schubstange 72 sind Aufnahmen 73 vorgesehen, welche eine gelenkige Lagerung eines Hebels 74 ermöglichen, der an einem gegenüberliegenden Ende mit dem Auflageelement 14 wirkverbunden ist. Gemäß einer ersten Ausführungsform ist vorgesehen, dass die Aufnahmen 73 als Langlochbohrungen 76 ausgebildet sind, wobei an einem Ende der Langlochbohrung ein Aktuator 77 zugeordnet ist, der eine Schwenkachse 78 des Hebels 74 in einer Endstellung der Langlochbohrung 76 durch ein Betätigungsglied fixiert. In dieser Position ist der Hebel 74 mit einer feststehenden Schwenkachse zur Schubstange 72 gehalten. Am gegenüberliegenden Ende des Hebels 74 ist eine Führung 79 vorgesehen, um die Schubbewegung der Hebel 74 über die Schubstange 72 in eine Schiebe-und Verschiebebewegung des Auflageelements 14 in Y-Richtung umzusetzen. Daraus ergibt sich folgende Funktionsweise:
Zur Einnahme einer Nullstellung wird der Antriebsmotor 21 betätigt, so dass die Schubstange 72 eine Verschiebebewegung gemäß Pfeil 81 durchführt. Die Schwenkachse 78 des Hebels 74 liegt somit an einem Ende der Langlochbohrung 76 an. Dadurch kann ein Zurückführen der Auflageelemente 14 erzielt werden, das heißt, es wirkt eine Zugbeanspruchung auf die Auflageelemente 14. Anschließend wird der Aktuator 77 betätigt, wodurch die Schwenkachse 78 zum Langloch 76 in einer definierten Position fixiert ist. Nach Erreichen der Nullstellung wird die Antriebsrichtung des Antriebsmotors 21 umgekehrt, so dass eine Bewegungsrichtung der Schubstange 71 entgegen Pfeil 81 erfolgt. Dadurch werden die Auflageelemente 14 in entgegengesetzter Richtung im Rahmen 12 verschoben. Sobald die betragsmäßig vorgesehene Verschiebebewegung für das jeweilige Auflageelement 14 erfolgt ist, wird der jeweilige Aktuator 76 angesteuert, so dass dieser die Schwenkachse 78 in dem Langloch 77 freigibt. Dadurch ist ein ansteuerbarer Freilauf gegeben. Eine weitere Schubbewegung der Schubstange 72 ist somit für die freigegebene Schwenkachse 78 ohne Einfluss, da diese Schwenkachse 78 quasi freilaufend in dem Langloch 76 geführt ist. Die weiteren Auflageelemente 14 können jedoch in eine betragsmäßig andere inaktive Position übergeführt werden.

Alternativ kann vorgesehen sein, dass der ansteuerbare Freilauf anstelle des verschiebbaren Betätigungsgliedes, welches in die Langlochbohrung eingreift, eine kraftform- und/oder reibschlüssige Anordnung aufnimmt, welche den Hebel 74 zur Schubstange 72 fixiert oder löst.

Bevorzugt ist eine solche Schubstange 72 mit allen Auflageelementen 14 gekoppelt, so dass eine gemeinsame Ansteuerung ermöglicht und eine individuelle Einstellung der Auflageelemente 14 über die Aktuatoren 77 gegeben ist.

In den Figuren 8a und b ist eine perspektivische Ansicht von Auflageelementen 14 dargestellt, die zu Trägerelementen 16 positioniert sind.

In Figur 8a ist eine Anordnung dargestellt, bei der die Auflageelemente 14, die in U-förmigen Ausnehmungen 86 geführt sind, verschiebbar zu den Trägerelementen 16 gelagert. In Figur 8b ist aufgrund der Relativbewegung der zwei Trägerelemente 16 zueinander eine Klemmung zu den Auflageelementen 14 gegeben, wodurch die voreingestellte Position der Auflageelemente 14 in Y-Richtung fixiert und aufrechterhalten wird. Eine solche Klemmung und Fixierung wird bspw. durch eine Verstelleinrichtung 91 gemäß Figur 9 ermöglicht. Diese Verstelleinrichtung 91 ist bevorzugt außerhalb des Rahmens 12 angeordnet und treibt über einen Antriebsmotor 21 ein Stellglied 92 an, welches bspw. eine Relativbewegung zwischen zwei benachbart zueinander angeordneten Trägerelementen 16 erzeugt. Dies wird durch eine Verzahnung 93 erzielt, die an einer Verstellscheibe 94 angreift, so dass in Abhängigkeit der Schwenkbewegung der Verstellscheibe 94 eine gegenläufige Ausrichtung der Trägerelemente 16 erfolgt. Dadurch kann auch eine vorbestimmte Klemmkraft auf die Auflageelemente 14 aufgebracht werden, die durch eine Stellbewegung des Antriebsmotors 21 bestimmbar ist. Alternativ kann vorgesehen sein, dass die Trägerelemente 16 einen größeren Abstand zueinander aufweisen und analog angesteuert werden, so dass beispielsweise vier gleichmäßig über die Breite des Rahmens 12 verteilt angeordnete Trägerelemente 16 eine Verklemmung mit den Auflageelementen 14 ermöglichen. Alternativ zu der in Figur 9 dargestellten Verstelleinrichtung 91 kann auch über eine Drehbewegung eines Stellgliedes eine Verschiebebewegung der Trägerelemente 16 erzielt werden. Die Verstelleinrichtungen 91 sind auf diese Ausführungsformen nicht beschränkt.

## Patentansprüche

1. Werkstückauflage zur Aufnahme eines insbesondere tafelförmigen Werkstücks in einer Bearbeitungsanlage, insbesondere Laserbearbeitungsanlage, welche das Werkstück mit einem Schneidstrahl bearbeitet, wobei die Werkstückauflage (11) einen Rahmen (12) aufweist, wobei die Werkstückauflage (11) in dem Rahmen (12) mehrere nebeneinander angeordnete Auflageelemente (14) aufnimmt, welche Tragpunktspitzen (41) aufweisen und ein Auflagefeld (17) für das oder die Werkstücke bilden und die Auflageelemente (14) in ihrer Arbeitsposition zum Rahmen (12) veränderbar sind, **dadurch gekennzeichnet, dass** zumindest eine Verschiebeeinrichtung (18) die Tragpunktspitzen (41) der Auflageelemente (14) durch eine Verschiebebewegung der Auflageelemente (14)gegenüber einer durch die benachbarten Tragpunktspitzen (41) gebildeten Auflageebene absenkt, um die Tragpunktspitzen (14) in eine inaktive Position außerhalb des Wirkbereichs des Schneidstrahls zur Bearbeitung des oder der Werkstücke zu positionieren.

2. Werkstückauflage nach Anspruch 1, **dadurch gekennzeichnet, dass** die Auflageelemente (14) einen Verschiebeweg von wenigstens einem halben Abstand von zwei benachbarten Tragpunktspitzen (41) aufweisen und dass vorzugsweise die Auflageelemente (14) bei einem Verschiebeweg, der größer als der halbe Abstand von zwei benachbarten Tragpunktspitzen (41) ist, gegenüber einer durch die Tragpunktspitzen (41) gebildeten Auflagenebene absenkbar sind.

3. Werkstückauflage nach Anspruch 2, **dadurch gekennzeichnet, dass** die Auflageelemente (14) an deren Unterseite eine Kulisse (37) aufweisen, die entlang einer Lagerstelle (38) des Rahmens (12) verschiebbar ist, wobei insbesondere die Kulisse (37) in einem Endabschnitt (36) der Auflageelemente (14) vorgesehen ist, die erst nach einem Verschiebeweg wirksam wird, der wenigstens einem halben Abstand von zwei benachbarten Tragpunktspitzen (41) entspricht.

4. Werkstückauflage nach einem der vorhergehenden Ansprüche, **dadurch gekennzeichnet, dass** die Verschiebeeinrichtung (18) eine Zustelleinrichtung (19) aufweist, an welcher nacheinander ein Antriebsmotor (21) angreift, der entlang einer Rahmenseite verfahrbar angeordnet ist oder dass jede Verschiebeeinrichtung (18) eine Zustelleinrichtung (19) und einen Antriebsmotor (21) umfasst.

5. Werkstückauflage nach einem der vorhergehenden Ansprüche, **dadurch gekennzeichnet, dass** zur Einstellung der Position der Tragpunktspitzen (41) im Auflagefeld (17) zunächst eine Hubbewegung des Auflageelementes (14), insbesondere in eine Nullstellung, vorgesehen ist, bei der das Auflageelement (14) auf Zug beansprucht wird und anschließend das Auflageelement (14) durch eine Schiebebewegung in die inaktive Position verfahrbar ist.

6. Werkstückauflage nach einem der vorhergehenden Ansprüche, **dadurch gekennzeichnet, dass** die Verschiebeeinrichtung (18) eine Zustelleinrichtung (19) und einen Antriebsmotor (21) umfasst, die durch eine Kupplung miteinander verbindbar sind.

7. Werkstückauflage nach Anspruch 6, **dadurch gekennzeichnet, dass** die Zustelleinrichtung (19) zumindest eine Spindel oder eine Gewindestange (27) umfasst.

8. Werkstückauflage nach Anspruch 6, **dadurch gekennzeichnet, dass** die Zustelleinrichtung (19) ein exzentrisch gelagertes Stellelement (52) umfasst, welches mit einem Lagerzapfen (54) in einem Langloch (53) des Auflageelementes (14) angreift.

9. Werkstückauflage nach Anspruch 8, **dadurch gekennzeichnet, dass** das Stellelement (52) eine Verzahnung (56) aufweist, durch welche das Stellelement (52) schwenkbar angetrieben ist und das Auflageelement (14) den Lagerzapfen (54) verschiebbar ansteuert und dass vorzugsweise das Stellelement (52) einen Kurvenabschnitt (61) aufweist, an dem ein Reibrad (62) angreift und das Stellelement (52) in seiner Winkelposition ansteuert.

10. Werkstückauflage nach Anspruch 8, **dadurch gekennzeichnet, dass** die Zustelleinrichtung (19) eine Schubstange (72) aufweist, die sich zumindest entlang von zwei Auflageelementen (14) erstreckt und durch einen Antriebsmotor (21) hin und her bewegbar ist, wobei jedes Auflageelement (14) zur Schubstange (72) mittels eines Hebels (74) gekoppelt ist, der an einem Ende schwenkbar zum Auflageelement (14) und am anderen Ende über einen ansteuerbaren Freilauf in der Schubstange (72) geführt ist und dass vorzugsweise der ansteuerbare Freilauf in der Schubstange (72) durch eine Aufnahme (73), insbesondere Langlochbohrung (76), ausgebildet ist und der Hebel (74) zur Schubstange (72) bei einer Hubbewegung in eine Nullstellung durch einen Aktuator (77), fixiert ist.

11. Werkstückauflage nach Anspruch 10, **dadurch gekennzeichnet, dass** der ansteuerbare Freilauf in Abhängigkeit des Schiebeweges der Schubstange (72) durch den Aktuator (77) freigegeben wird, so dass der Hebel (74) aus einer vorbestimmten Position in der Aufnahme (73) freikommt und bei einer weiteren Schubbewegung der Schubstange (72) ein Freilauf der Schwenkachse (78) des Hebels (74) in der Aufnahme (73) gegeben ist und dass vorzugsweise der Aktuator (77) pneumatisch, elektrisch, hydraulisch oder mechanisch ansteuerbar ist.

12. Werkstückauflage nach einem der Ansprüche 10 oder 11, **dadurch gekennzeichnet, dass** ein freies Ende des Auflageelementes (14) und des dem Auflageelement (14) zugeordneten Ende des Hebels (74) durch eine am Rahmen (12) angeordnete Führung (79) längsverschiebbar geführt ist.

13. Werkstückauflage nach einem der vorhergehenden Ansprüche, **dadurch gekennzeichnet, dass** im Rahmen (12) Trägerelemente (16) vorgesehen sind, die mit den Auflageelementen (14) eine gitterförmige Struktur bilden und die Auflageelemente (14) in schlitzförmigen Ausnehmungen (76) aufnehmen.

14. Werkstückauflage nach Anspruch 13, **dadurch gekennzeichnet, dass** wenigstens ein Trägerelement (16) zu wenigstens einem weiteren Trägerelement (16) durch eine Verstelleinrichtung (91) in deren Längserstreckung zum Rahmen (12) verschiebbar ansteuerbar sind und durch eine Verschiebebewegung, insbesondere gegenläufige Verschiebebewegung, die voreingestellte inaktive Position der Tragpunktspitzen der Auflageelementen (14) durch Klemmung fixiert.

## Claims

1. A workpiece support for receiving a workpiece, in particular of slab-like shape, in a machining unit, in particular a laser machining unit, which processes the workpiece using a cutting beam, said workpiece support (11) having a frame (12), said workpiece support (11) receiving in said frame (12) a plurality of support elements (14) disposed side by side that are provided with pointed carrier tips (41) and form a support zone (17) for the workpiece or the workpieces, and the working positions of said support elements (14) being variable with respect to the frame (12), **characterised in that** at least one shifting device (18) lowers the pointed carrier tips (41) of the support elements (14) by way of a shifting movement of the support elements (14) with respect to a support plane formed by the adjacent pointed carrier tips (41) in order to position the pointed carrier tips (41) in an inactive position outside the operating area of the cutting beam used for machining the workpiece or the workpieces.

2. The workpiece support as claimed in claim 1, **characterised in that** the support elements (14) have a distance of displacement corresponding to at least half a distance between two adjacent pointed carrier tips (41) and **in that** for a distance of displacement that is superior to half the distance between two adjacent pointed carrier tips (41) the support elements (14) are preferably lowerable with respect to a plane formed by said pointed carrier tips (41).

3. The workpiece support as claimed in claim 2, **characterised in that** the support elements (14) have a motion link (37) formed on the lower surface thereof which is displaceable along a bearing (38) of the frame (12), wherein in particular the motion link (37) is provided in a respective end portion (36) of the support elements (14) which will only become effective after a distance of displacement that corresponds to at least half of the distance between two adjacent pointed carrier tips (41).

4. The workpiece support as claimed in any one of the preceding claims, **characterised in that** the shifting device (18) is provided with setting means (19) acted upon by a drive motor (21) that is displaceably arranged along one side of the frame or **in that** each shifting device (18) comprises a setting means (19) and a drive motor (21).

5. The workpiece support as claimed in any one of the preceding claims, **characterised in that** adjusting the position of the pointed carrier tips (41) in the support zone (17) first involves a lifting movement of the respective support element (14), in particular into the neutral position, in the course of which the support element (14) is subjected to tensile stress, and then a pushing movement by means of which the support element (14) is displaceable to an inactive position.

6. The workpiece support as claimed in any one of the preceding claims, **characterised in that** the shifting device (18) comprises a setting means (19) and a drive motor (21) which are interconnectable by means of a coupling.

7. The workpiece support as claimed in claim 6, **characterised in that** the setting means (19) comprises at least a spindle or a threaded rod (27).

8. The workpiece support as claimed in claim 6, **characterised in that** the setting means (19) comprises an eccentrically mounted actuator element (52) a bearing journal (54) of which is in engagement with an elongated hole (53) of the support element (14).

9. The workpiece support as claimed in claim 8, **characterised in that** the actuator element (52) has a toothing (56) by which the actuator element (52) is pivotably driven and the support element (14) activates the bearing journal (54) in a sliding manner, and **in that** the actuator element (52) preferably has a curved segment (61) against which a friction wheel (62) is applied and activates the actuator element (52) so as to set its angular position.

10. The workpiece support as claimed in claim 8, **characterised in that** the setting means (19) has a push rod (72) which extends at least along two support elements (14) and may be moved forward and back by means of a drive motor (21), each support element (14) being coupled to the push rod (72) by means of a lever (74) which is pivotably guided on one end with respect to the support element (14) and is guided on the other end via an activatable free running section formed in the push rod (72), and **in that** said activatable free running section in the push rod (72) is preferably formed by a mounting device (73), in particular by an elongated mounting hole (76), and the lever (74) is fixed during a lifting movement in a neutral position with respect to the push rod (72) by an actuator (77).

11. The workpiece support as claimed in claim 10, **characterised in that** the activatable free running section may be released by the actuator (77) depending on the pushing distance of the push rod (72), such that the lever (74) is released from a predetermined position within the mounting device (73) and upon a further pushing movement of the pushing rod (72) a free running movement of the pivot axis (78) of the lever (74) within the mounting device (73) is provided, and **in that** the actuator (77) is preferably activatable pneumatically, electrically, hydraulically, or mechanically.

12. The workpiece support as claimed in any one of claims 10 or 11, **characterised in that** a free end of the support element (14) and the end of the lever (74) associated with the support element (14) are guided in a longitudinally slideable manner by a guide (79) arranged on the frame (12).

13. The workpiece support as claimed in any one of the preceding claims, **characterised in that** the frame (12) is provided with carriers (16) which combine with the support elements (14) to form a grid-like structure and to accommodate the support elements (14) within slot-like recesses (76).

14. The workpiece support as claimed in claim 13, **characterised in that** at least one carrier (16) may be activated so as to be shifted relative to at least one other carrier (16) in its longitudinal extension with respect to the frame (12) by means of an adjusting device (91) and, by way of a shifting movement, in particular a shifting movement in opposite directions, fixes the pre-set inactive position of the pointed carrier tips of the support elements (14) through a clamping action.

## Revendications

1. Porte-pièce destiné à recevoir une pièce à usiner, notamment en forme de plaque, dans une unité d'usinage, notamment une unité d'usinage au laser, laquelle usine la pièce à usiner au moyen d'un jet de coupe, le porte-pièce (11) présentant un cadre (12), le porte-pièce (11) recevant dans ledit cadre (12) plusieurs éléments d'appui (14) disposés côte à côte, lesquels présentent des pointes de support (41) et forment une zone d'appui (17) pour la pièce ou les pièces à usiner, et les éléments d'appui (14) pouvant modifier leur position de travail par rapport au cadre (12), **caractérisé en ce qu'**au moins un mécanisme de déplacement (18) abaisse, par un mouvement de déplacement des éléments d'appui (14) par rapport à un plan d'appui formé par les pointes de support (41) voisines, les pointes de support (41) des éléments d'appui (14) afin de positionner les pointes de support (41) dans une position inactive située en-dehors du secteur d'opération du jet de coupe utilisé pour l'usinage de la pièce ou des pièces à usiner.

2. Porte-pièce selon la revendication 1, **caractérisé en ce que** les éléments d'appui (14) présentent une distance de déplacement correspondant à au moins une mi-distance entre deux pointes de support (41) voisines, et **en ce que** de préférence les éléments d'appui (14) sont abaissables par rapport à un plan d'appui formé par les pointes de support (41) lorsqu'une distance de déplacement est supérieure à la mi-distance entre deux pointes de support (41) voisines.

3. Porte-pièce selon la revendication 2, **caractérisé en ce que** les éléments d'appui (14) présentent sur leur face inférieure une coulisse (37) qui est déplaçable le long d'un point d'appui (38) du cadre (12), la coulisse (37) notamment étant prévue dans une extrémité (36) des éléments d'appui (14) qui devient efficace uniquement après une distance de déplacement qui correspond au moins à une mi-distance entre deux pointes de support (41) voisines.

4. Porte-pièce selon l'une quelconque des revendications précédentes, **caractérisé en ce que** le mécanisme de déplacement (18) présente un dispositif d'avance (19) sur lequel agit successivement un moteur d'entraînement (21) qui est disposé de manière à pouvoir se déplacer le long d'un côté du cadre, ou **en ce que** chaque mécanisme de déplacement (18) comprend un dispositif d'avance (19) et un moteur d'entraînement (21).

5. Porte-pièce selon l'une quelconque des revendications précédentes, **caractérisé en ce que**, pour l'ajustage de la position des pointes de support (41) dans la zone d'appui (17), un mouvement de levée de l'élément d'appui (14) est prévu, notamment vers une position zéro, au cours duquel l'élément d'appui (14) est soumis à un effort de traction, et que l'élément d'appui (14) peut être ensuite déplacé, par un mouvement de poussée, dans la position inactive.

6. Porte-pièce selon l'une quelconque des revendications précédentes, **caractérisé en ce que** le mécanisme de déplacement (18) comprend un dispositif d'avance (19) et un moteur d'entraînement (21) qui peuvent être reliés entre eux par un dispositif d'accouplement.

7. Porte-pièce selon la revendication 6, **caractérisé en ce que** le dispositif d'avance (19) comprend au moins une broche ou une tige filetée (27).

8. Porte-pièce selon la revendication 6, **caractérisé en ce que** le dispositif d'avance (19) comprend un élément de réglage (52) monté de manière excentrique et pourvu d'un tourillon (54) qui engrène dans un trou oblong (53) de l'élément d'appui (14).

9. Porte-pièce selon la revendication 8, **caractérisé en ce que** l'élément de réglage (52) présente une denture (56) permettant d'entraîner l'élément de réglage (52) de manière pivotante et que l'élément de d'appui (14) active le tourillon (54) en le faisant coulisser, et **en ce que** de préférence l'élément de réglage (52) présente une partie courbe (61) contre laquelle une roue de friction (62) appuie et active l'élément de réglage (52) en modifiant sa position angulaire.

10. Porte-pièce selon la revendication 8, **caractérisé en ce que** le dispositif d'avance (19) présente une barre de poussée (72) qui s'étend au moins le long de deux éléments d'appui (14) et à laquelle un moteur entraînement (21) peut imprimer un mouvement de va-et-vient, chaque élément d'appui (14) étant couplé à la barre de poussée (72) au moyen d'un levier (74) qui, à une extrémité, est guidé de manière à pouvoir pivoter par rapport à l'élément d'appui (14) et qui, à l'autre extrémité, est guidé dans la barre de poussée (72) par une section de course libre activable, et **en ce que** de préférence ladite section de course libre activable est formée par un logement (73), notamment un trou oblong (76), et **en ce que** le levier (74) est, lors d'un mouvement de levée, fixé par un actionneur (77) dans une position zéro par rapport à la barre de poussée (72).

11. Porte-pièce selon la revendication 10, **caractérisé en ce que** la section de course libre activable est libérée par l'actionneur (77) en fonction de la distance de poussée de la barre de poussée (72) de sorte que le levier (74) sort d'une position prédéfinie dans le logement (73), ce qui entraîne, lors d'un autre mouvement de poussée de la barre de poussée (72), une course libre de l'axe de pivotement (78) du levier (74) dans le logement (73), et **en ce que** de préférence l'actionneur (77) est activable de manière pneumatique, électrique, hydraulique ou mécanique.

12. Porte-pièce selon l'une quelconque des revendications 10 ou 11, **caractérisé en ce qu'**une extrémité libre de l'élément d'appui (14) et l'extrémité du levier (74) associée à l'élément d'appui (14) sont guidées par un guide (79) disposé dans le cadre (12) de manière à pouvoir être déplacées longitudinalement.

13. Porte-pièce selon l'une quelconque des revendications précédentes, **caractérisé en ce que** dans le cadre (12) sont prévus des éléments porteurs (16) qui forment avec les éléments d'appui (14) une structure en forme de grille et reçoivent les éléments d'appui (14) dans des évidements (76) en forme de fente.

14. Porte-pièce selon la revendication 13, **caractérisé en ce qu'**au moins un élément porteur (16) peut être activé par un dispositif de réglage (91) de manière à pouvoir être déplacé, dans le sens longitudinal de celui-ci par rapport au cadre (12), vers au moins un autre élément porteur (16) et fixe par serrage la position inactive préréglée des pointes de support des éléments d'appui (14), et ce par un mouvement de déplacement, notamment un mouvement de déplacement en sens opposé.
